# EUROPÄISCHE PATENTSCHRIFT

(11) **EP 0 998 846 B1**
(45) Veröffentlichungstag und Bekanntmachung des Hinweises auf die Patenterteilung: **13.10.2004**
(21) Anmeldenummer: 99121784.5
(22) Anmeldetag: 03.11.1999
(51) Int. Cl.: A01G 5/00, A01G 3/08, A01G 3/00

(54) **Schneidvorrichtung zum Schneiden von Schnittblumen**
Cutting device for trimming cut flowers
Dispositif de coupe pour raccourcir des fleurs coupées

(30) Priorität: 04.11.1998 DE 19850813
(43) Veröffentlichungstag der Anmeldung: 10.05.2000
(73) Patentinhaber: Hermanns, Udo, 52062 Aachen (DE)
(72) Erfinder: Hermanns, Udo, 52062 Aachen (DE)
(74) Vertreter: Thul, Hermann

(56) Entgegenhaltungen:
- EP-A- 0 021 493
- EP-A- 0 331 225
- GB-A- 2 305 881
- US-A- 4 348 832

## Beschreibung

Die Erfindung betrifft eine Schneidvorrichtung zum Schneiden wenigstens einer einen Stengel aufweisenden Schnittblume, insbesondere zum Abtrennen eines unteren Endes des Stengels einer bereits zuvor geernteten Schnittblume.

Die bekannten Schneidvorrichtungen sind im einfachsten Fall Messer. Durch den Einsatz eines konventionellen Messers kann ein sauberer Abschnitt von überstehenden Teilen der Blumenstengel erzielt werden. Insbesondere ist es hierbei möglich, die Blumenstengel auch schräg zu durchtrennen, so dass sich beim Schnitt die wirksame Oberfläche für die Aufnahme von Wasser erhöht. Der Einsatz eines Messers ist jedoch mit dem Problem verbunden, dass eine Verletzungsgefahr für den Benutzer besteht.

Eine weitere bekannte Schneidvorrichtung für Schnittblumen ist eine Schere. Ein Einsatz einer Schere zum Abtrennen von Bestandteilen der Blumenstengel ist mit dem Nachteil verbunden, dass ein Druck auf den Blumenstengel ausgeübt wird. Insbesondere bei einem wegen der erhöhten Wasseraufnahme bevorzugten schrägen Anschnitt wird der seitliche Druck auf den Blumenstengel sehr hoch. Hierdurch wird die Lebensdauer der Schnittblume verringert.

Aus der UK-Patentanmeldung GB 2 305 881 A ist ein Schneidwerkzeug zum Schneiden von Zweigen bekannt, das ein in einem Schaft gleitendes Messer aufweist, welches durch ein Zusammendrücken von zwei Griffen in eine zur Aufnahme des Schneidguts dienende Ausnehmung geführt wird.

Der Erfindung liegt die Aufgabe zugrunde, eine Schneidvorrichtung zu schaffen, mit der ein schnelles und einfaches Abtrennen von Teilen der Blumenstengel möglich ist. Vorzugsweise soll sich die Schneidvorrichtung zu einem schrägen Abschneiden der Blumenstengel eignen.

Erfindungsgemäß wird diese Aufgabe dadurch gelöst, dass eine Schneidvorrichtung zum Schneiden wenigstens einer einen Stengel aufweisenden Schnittblume mit einem beweglich gelagerten Messer zum Durchtrennen des Stengels so ausgestaltet wird, dass die Schneidvorrichtung zwei Griffe umfasst, zwischen denen sich eine Feder zum Auseinanderdrücken befindet, wobei der eine Griff in ein zur Aufnahme wenigstens eines Stengels dienendes Rohr mündet, an dem eine Führungsschiene zur bewegbaren Lagerung des Messers angeordnet ist, über die das Messer in das Innere des Rohrs verschiebbar ist und wobei der andere Griff über wenigstens eine Gelenkstange mit dem Messer verbunden ist.

In einer besonders bevorzugten Ausführungsform der erfindungsgemäßen Schneidvorrichtung ist das Messer so bewegbar, dass es die Schnittblume schräg gegenüber der Hauptrichtung ihres Stengels durchtrennen kann.

Diese Ausführungsform zeichnet sich dadurch aus, dass mit ihr ein schräges Abschneiden von Teilen der Blumenstengel erzielt werden kann. Hierdurch ist es auf eine einfache Weise möglich, einen Schrägschnitt für die Blumenstengel zu erzielen.

Eine Erhöhung der mechanischen Stabilität kann dadurch erzielt werden, dass sie eine Führungsschiene zur bewegbaren Lagerung des Messers enthält.

Eine besonders einfache Betätigung des Messers wird dadurch erzielt, dass das Messer über mindestens eine Gelenkstange mit wenigstens einem der Griffe verbunden ist.

Es ist besonders vorteilhaft, daß sie wenigstens zwei Gelenkstangen aufweist, wobei die beiden Gelenkstangen im wesentlichen parallel zueinander angeordnet sind.

Vorteilhafterweise wird dabei die Schnittvorrichtung so gestaltet, daß sich das Messer im wesentlichen zwischen den Gelenkstangen befindet.

Die Handhabbarkeit der Schneidvorrichtung kann weiter dadurch erhöht werden, daß das Rohr zur Aufnahme von wenigstens einem Blumenstengel dient.

Besonders vorteilhaft ist es, daß das Rohr mit wenigstens einem der Griffe verbunden ist.

Zur Verbesserung der Zufuhr der Blumenstengel in das Rohr ist es zweckmäßig, daß das Rohr an einem Ende in einen Trichter mündet.

Um einen seitlichen Auswurf der abgeschnittenen Teile der Blumenstengel zu erzielen, ist es zweckmäßig, daß das Rohr in wenigstens einem Seitenbereich eine Öffnung aufweist.

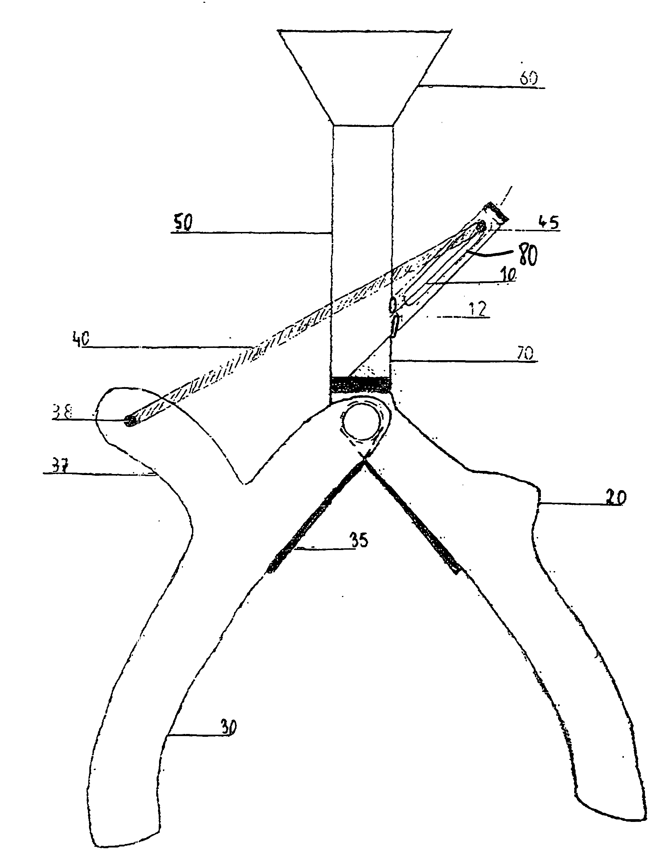

Weitere Vorteile, Besonderheiten und zweckmäßige
Weiterbildungen der Erfindung ergeben sich aus der nachfolgenden Darstellung eines bevorzugten Ausführungsbeispiels anhand der Zeichnung.

Die Zeichnung zeigt eine Aufsicht auf eine erfindungsgemäße Schneidvorrichtung.

Die Schneidvorrichtung weist ein vorzugsweise aus rostfreiem Stahl bestehendes Messer 10 auf, das verschiebbar gelagert ist.

Zur verschiebbaren Lagerung des Messers 10 dient beispielsweise eine Führungsschiene. Ein Abstreifer 12, der beispielsweise zwei Gummilippen aufweist, ist so angeordnet, daß er auf dem Messer 10 haftende Schnittreste abstreifen kann.

Die Schneidvorrichtung weist zwei Griffe 20, 30, vorzugsweise aus Kunststoff, auf, damit die Schneidvorrichtung von einem Benutzer möglichst einfach gehalten und eingesetzt werden kann. Vorzugsweise sind die Griffe 20, 30 anatomisch geformt.

Zwischen den Griffen 20, 30 befindet sich ein krafterzeugendes Mittel, beispielsweise eine Metallfeder 35. Bei der Metallfeder 35 handelt es sich vorzugsweise um eine Feder, die so angeordnet ist, daß sie die Griffe 20, 30 auseinander drückt.

Der Griff 30 ist mit einem Vorsprung 37 versehen, der in zwei Gelenke 38 mündet. Die Gelenke 38 sind jeweils mit einer Gelenkstange 40 verbunden, die an ihrem anderen Ende in weitere Gelenke 45 mündet. Die Gelenke 45 sind mit dem Messer 10 verbunden. Der Verbindungspunkt zwischen den Gelenken 45 und dem Messer 10 liegt hierbei an einer der Schnittfläche des Messers 10 entgegengesetzten Seite des Messers 10.

Der erste Griff mündet in ein Rohr 50, das einen Durchmesser von etwa 5 mm bis 50 mm, vorzugsweise etwa 10 mm aufweist.

Das Rohr 50 mündet an dem Ende, das entgegengesetzt zu dem Griff 20 liegt, in einen Trichter 60, der im Bereich seiner Trichteröffnung einen Durchmesser von etwa 20 mm bis 100 mm aufweist.

Eine am unteren Ende des Rohres 50 befindliche Öffnung 70 dient zu einem seitlichen Auswurf von abgeschnittenen Teilen der Blumenstengel.

Mit Hilfe dieser Schneidvorrichtung wird der Schneidvorgang wie folgt durchgeführt:

Durch die Metallfeder 35 werden die Griffe 20, 30 auseinander gedrückt. Hierdurch wird das Messer 10 aus dem Rohr 50 gezogen. Anschließend führt der Benutzer über den Trichter 60 in das freie Rohr 50 einen oder mehrere Blumenstengel ein.

Nach dem Einführen der Blumenstengel in das Innere des Rohrs 50 drückt der Benutzer die Griffe 20 und 30 gegeneinander. Ober die Gelenkstange 40 wird hierbei das Messer 10 in das Innere des Rohres 50 verschoben. Hierbei durchtrennt es die Blumenstengel. Die Blumenstengel erfahren außerhalb der Schneidzone keine Druckbelastung, da sie innerhalb des Rohres 50 großflächig gelagert sind.

Der vordere Bereich des Messers, insbesondere seine Schneidfläche, ist der Form des Rohres so angepaßt, daß alle innerhalb des Rohres 50 befindlichen Blumenstengel durchtrennt werden.

Ein besonderer Vorteil der Erfindung liegt darin, daß es mit ihrer Hilfe möglich ist, die Blumenstengel von mehreren Blumen in einem einzigen Schneidvorgang zu durchtrennen.

## Patentansprüche

1. Schneidvorrichtung zum Schneiden wenigstens einer einen Stengel aufweisenden Schnittblume mit einem beweglich gelagerten Messer zum Durchtrennen des Stengels,
**dadurch gekennzeichnet ,**
**dass** die Schneidvorrichtung zwei Griffe (20, 30) umfasst, zwischen denen sich eine Feder (35) zum Auseinanderdrückern befindet, wobei der eine Griff (20) in ein zur Aufnahme wenigstens eines Stengels dienendes Rohr (50) mündet, an dem eine Führungsschiene zur bewegbaren Lagerung des Messers (10) angeordnet ist, über die das Messer (10) in das Innere des Rohrs (50) verschiebbar ist, und wobei der andere Griff (30) über wenigstens eine Gelenkstange (410) mit dem Messer (10) verbunden ist.

2. Schneidvorrichtung nach Anspruch 1,
**dadurch gekennzeichnet ,**
**dass** das Messer (10) so bewegbar ist, dass es wenigstens einen Stengel schräg zu seiner Hauptrichtung durchtrennen kann.

3. Schneidvorrichtung nach einem oder beiden der Ansprüche 1 und 2,
**dadurch gekennzeichnet,**
**dass** sie wenigstens zwei Gelenkstangen (40) aufweist, wobei die Gelenkstangen (40) im Wesentlichen parallel zueinander angeordnet sind.

4. Schneidvorrichtung nach einem oder mehreren der vorangegegangenen Ansprüche,
**dadurch gekennzeichnet,**
**dass** sich das Messer (10) im Wesentlichen zwischen den Gelenkstangen (40) befindet.

5. Schneidvorrichtung nach einem oder mehreren der vorangegangenen Ansprüche,
**dadurch gekennzeichnet ,**
**dass** das Rohr (50) an einem Ende in einem Trichter (60) mündet.

6. Schneidvorrichtung nach einem oder mehreren der vorangegangenen Ansprüche,
**dadurch gekennzeichnet ,**
**dass** das Rohr in wenigstens einem Seitenbereich eine Öffnung (70) aufweist, die zu einem seitlichen Auswurf von abgeschnittenen Teilen wenigstens eines Stengels dient.

## Claims

1. A cutting device for cutting at least one cut flower with a stem, having a movably mounted blade to sever the stem,
**characterized in that**
the cutting device has two handles (20, 30) between which there is a spring (35) for pushing them apart, whereby one handle (20) opens up into a tube (50) that serves to receive at least one stem, a guide rail being arranged on said tube so that the blade (10) can be mounted movably and, via said guide rail, the blade (10) can be slid into the interior of the tube (50), and whereby the other handle (30) is connected to the blade (10) by at least one linkage rod (40).

2. The cutting device according to Claim 1,
**characterised in that**
the blade (10) is movable in such a way that it can sever at least one stem diagonally relative to its main direction.

3. The cutting device according to one or both of Claims 1 and 2,
**characterised in that**
it has at least two linkage rods (40), whereby the linkage rods (40) are arranged essentially parallel to each other.

4. The cutting device according to one or more of the preceding claims,
**characterised in that**
the blade (10) is situated essentially between the linkage rods (40).

5. The cutting device according to one or more of the preceding claims,
**characterised in that**
the tube (50) opens at one end into a funnel (60).

6. The cutting device according to one or more of the preceding claims,
**characterised in that**
the tube has an opening (70) in at least one side area, said opening serving to laterally eject the parts that have been cut off of at least one stem.

## Revendications

1. Dispositif de coupe pour couper au moins une fleur coupée présentant une tige, qui comprend une lame montée mobile pour couper la tige,
**caractérisé en ce que**
le dispositif de coupe comprend deux poignées (20, 30) entre lesquelles se trouve un ressort pour l'écartement, dont une première poignée (20) débouche dans un tube (50) servant à recevoir au moins une tige, et le long duquel est disposé un rail de guidage destiné au montage mobile de la lame (10) et à l'insertion de la lame (10) dans le volume intérieur du tube (50), et dont l'autre poignée (30) est reliée à la lame (10) par au moins une biellette d'articulation (40).

2. Dispositif de coupe selon la revendication 1,
**caractérisé en ce que**
la lame (10) peut être déplacée de manière à pouvoir couper au moins une tige obliquement par rapport à sa direction principale.

3. Dispositif de coupe selon une des revendications 1 et 2 ou selon les deux revendications,
**caractérisé par**
au moins deux biellettes d'articulation (40) sensiblement parallèle entre elles.

4. Dispositif de coupe selon une ou plusieurs des revendications précédentes,
**caractérisé en ce que**
la lame (10) se trouve sensiblement entre les biellettes d'articulation (40).

5. Dispositif de coupe selon une ou plusieurs des revendications précédentes,
**caractérisé en ce que**
le tube (50) débouche à une extrémité dans un entonnoir (60).

6. Dispositif de coupe selon une ou plusieurs des revendications précédentes,
**caractérisé en ce que**
le tube présente, dans au moins une région latérale, une ouverture (70) qui sert pour l'éjection latérale des parties coupées d'au moins une tige.
